# EUROPÄISCHE PATENTANMELDUNG

(11) **EP 0 736 646 A1**
(43) Veröffentlichungstag der Anmeldung: **09.10.1996**
(21) Anmeldenummer: 96103148.1
(22) Anmeldetag: 01.03.1996
(51) Int. Cl.: E04F 15/18, B32B 5/18

(54) **Platte oder bahnförmige Rolle aus Hartschaum**

(30) Priorität: 07.04.1995 DE 19513113
(71) Anmelder: SELIT Dämmtechnik GmbH, 55234 Erbes-Büdesheim (DE)
(72) Erfinder: Seitner, Bernd, 55234 Erbes-Büdenheim (DE)
(74) Vertreter: Becker, Bernd, Dipl.-Ing.

(57) **Zusammenfassung**

Die Erfindung betrifft eine Platte oder bahnförmige Rolle aus einem extrudierten, vollständig aufgeschäumten Polystyrol-Hartschaum oder einem im Block geschäumten und anschließend geschälten Polystyrol-Hartschaum, die zur Verwendung als Unterlagsplatte zur Wärmedämmung, Feuchtigkeitsisolierung, Trittschalldämmung und zum Unebenheitsausgleich für Holzparkett, Holzdielenböden, Laminatböden und Korkfertigparkett vorgesehen ist. Der Fußboden besteht aus einem Untergrund (1), auf dem die Unterlagsplatte (3) aufgelegt ist. Die Oberseite (6) der Unterlagsplatte (3) ist bevorzugt mit einer Dampfsperre versehen.

## Beschreibung

Die Erfindung betrifft eine Platte oder bahnförmige Rolle aus einem extrudierten, vollständig aufgeschäumten Polystyrol-Hartschaum oder einem im Block geschäumten und anschließend geschälten Polystyrol-Hartschaum.

Es ist bekannt, zu Herstellung von aus Polystyrol-Schaumstoff bestehenden Platten zunächst mittels eines Extruders unter Einwirkung von Treibgas mit hohem Druck auf die flüssige Schmelze eine Polystyrol-Schaumstoff-Folie zu fertigen, die dann unmittelbar oder nach einer Lagerzeit in einem Infrarotfeld oder im Wasserbad vollständig zu einer Polystyrol-Schaumstoff-Platte aufgeschäumt wird. Die auf diese Weise erhaltenen Platten, die eine Dicke von mindestens 3 mm aufweisen sollten, um einen ausreichenden Isoliereffekt zu erzielen, werden als sogenannte Isolier-Untertapete gegen kalte und feuchte Wände unter entsprechender Ausrichtung der Stoßfugen sowohl in Längsrichtung als auch in Querrichtung mittels eines handelsüblichen Klebers an der zu isolierenden Wand befestigt.

Derartige Platten haben den Vorteil, daß sie einerseits Unebenheiten in der Wand ausgleichen und andererseits auch als Untertapete dienen können, um eine Isolierung gegen äußere Einflüsse von Kälte und Feuchtigkeit auf die Wände zu erzielen. Eine solche, als Untertapete verwendete Polystyrol-Schaumstoff-Platte hat daher hervorragende Eigenschaften gegen unerwünschten Kälte- und Feuchtigkeitseinfluß. Darüber hinaus sind derartige Platten auch zur Lärmdämmung bzw. -minderung geeignet. Weiterhin sind solche Polystyrol-Schaumstoff-Platten aus im Block geschäumten und abschließend geschälten Polystyrol-Schaumstoff bekannt, die ebenfalls als Untertapete oder als Deckenverkleidung für einen Raum Anwendung finden.

Aus dem Gebiet der Fußbodenverlegung, insbesondere von Holzparkett, Holzdielenböden, Laminatböden und Korkfertigparkett, ist es bekannt, derartige Böden direkt auf einer Unterlage, beispielsweise einem Betonboden, entweder schwimmend oder mittels Klebung zu verlegen. Dadurch können jedoch keine Unebenheiten im Unterboden ausgeglichen werden. Des weiteren ergibt die unmittelbare Verlegung dieser Böden auf einem Unterboden keinen Schutz gegen Kälte, Feuchtigkeit oder Geräusche.

Weiterhin ist es bekannt, zwischen dem Unterboden und dem Holzparkett, Holzdielenboden, Laminatboden bzw. Korkfertigparkett eine Lage aus Wellpappkarton einzubringen, um zumindest eine geringe Dämmwirkung zu erzeugen. Derartiger Wellpappkarton ist jedoch bekanntermaßen besonders empfindlich gegen Feuchtigkeit. Geringes Auftreten von Feuchtigkeit führt bereits dazu, daß der Wellpappkarton gewissermaßen in sich zusammenfällt. Dadurch gehen seine Dämmeigenschaften verloren, da die dem Wellpappkarton innewohnenden Hohlräume beseitigt werden. Darüber hinaus kann es zur Schimmelbildung unterhalb des Parketts bzw. Dielenbodens kommen.

Es ist auch bekannt, zwischen Unterboden und zu verlegendem Holz- bzw. Korkboden eine Polyethylen-Schaumschicht einzubringen. Eine solche Polyethylen-Schaumschicht ist jedoch nicht in allen Anwendungsfällen ausreichend dimensionsstabil und weist darüber hinaus nicht immer ausreichende Wärmedämmungseigenschaften auf.

Es ist daher Aufgabe der vorliegenden Erfindung, den Einsatzbereich von Platten oder Rollen der eingangs genannten Art zu erweitern, um bestimmte Parameter im neuen Einsatzbereich zu verbessern.

Erfindungsgemäß ist eine derartige Platte oder Rolle zur Verwendung als Unterlagsplatte zur Wärmedämmung, Feuchtigkeitsisolierung, Trittschalldämmung und zum Unebenheitsausgleich für Holzparkett, Holzdielenböden, Laminatböden und Korkfertigparkett vorgesehen.

In weiterer Ausbildung der Platte oder Rolle ist auf die Oberseite eine Dampfsperre aufgebracht. Bevorzugt ist die Dampfsperre eine auf die Oberseite der Platte oder Rolle aufkaschierte Aluminiumfolie. Alternativ besteht die Dampfsperre zweckmäßigerweise aus einem flüssig aufgetragenen, aushärtbaren Material.

Die Platte weist vorzugsweise eine Stärke von etwa 2 bis 7 mm aufweist.

Nach einer Weiterbildung der Erfindung ist die Rückseite der Platte oder Rolle mit Vertiefungen und/oder Erhöhungen versehen. Die Vertiefungen können aus rasterartig angeordneten, V-förmigen Rille bestehen. Vorgesehene Erhöhungen können als rasterartig angeordnete Noppen ausgebildet sein. Die Vertiefungen bzw. Erhöhungen können die unterschiedlichsten Ausgestaltungen aufweisen, wie beispielsweise kleine leistenförmige Erhebungen.

Die Platte oder Rolle ist entweder schwimmend unter dem Holzparkett, Holzdielenboden, Laminatboden bzw. Korkfertigparkett verlegt oder deren Rückseite ist mit der Oberfläche eines Untergrundes verklebt. Alternativ kann deren Oberseite mit der Unterfläche des Holzparketts, Holzdielenbodens, Laminatbodens bzw. Korkfertigparketts verklebt sein. Auch beide Varianten können gemeinsam angewandt werden.

Die Dehnfugen zwischen benachbarten Platten sind mit selbstklebenden Folienstreifen abgedeckt. In einer anderen Ausbildung der Platte kann die Oberseite der Platte eine Papierkaschierung aufweisen.

Die Verwendung einer solchen Platte oder bahnförmigen Rolle ermöglicht eine schwimmende oder auch klebende Verlegung von Holzparkett, Holzdielenböden, Laminatböden und Korkfertigparkett auf einen Untergrund. Diese Unterlagsplatte bzw. Unterlags-Rollenbahn schützt die Böden weitgehend vor aufsteigender Baufeuchtigkeit, bietet eine hervorragende Wärmedämmung bei einer geringen Aufbauhöhe von vorzugsweise 3 mm und vermindert den Trittschall und sorgt somit für einen erhöhten Gehkomfort. Darüber hinaus werden Unebenheiten im Unterboden ausgeglichen. Diese Unterlagsplatte bzw. Rollenbahn ist beständig gegenüber Zement, Kalk, Gips. Bitumen, sowie gegen Ausblühungen von Salzen, Laugen, Alkalien, bestimmten Säuren und nahezu allen wäßrigen Medien. Sie fault auch nicht, schimmelt nicht und ist geruchsneutral.

Von besonderem Vorteil für die Fußbodenverlegung sind die hervorragenden Wärmedämmungseigenschaften der Unterlagsplatte bzw. -bahn. Eine 3 mm starke Unterlagsplatte bzw. -bahn gemäß der vorliegenden Erfindung hat etwa den gleiche Wärmedämmungskoeffizienten, wie 12 mm starkes Holz, 20 mm starker Gasbeton, 80 mm Kalksandstein oder 200 mm Beton.

Ein solche 3 mm starke Unterlagsplatte bzw. -bahn erreicht eine Verbesserung des Trittschallmaßes von 13 dB. Werden beispielsweise zwei Lagen von 3 mm-Platten übereinander gelegt oder eine 6 mm starke Platte verwendet, so wird ein Trittschallmaß von 16 dB erreicht.

Darüber hinaus werden beispielsweise kleine Bohrlöcher oder Unebenheiten, wie kleine Vertiefungen oder Erhebungen im Unterboden ausgeglichen.

Hinsichtlich der Feuchtigkeit hat die Unterlagsplatte eine dampfbremsende Wirkung gegen aufsteigende Feuchtigkeit.

Die an der Unterseite der Unterlagsplatte bzw. -bahn ausgebildeten rasterartig angeordneten, V-förmigen Rillen haben die Wirkung, daß die Oberfläche der Unterlagsplatte bzw. -bahn vergrößert wird und dadurch Hohlräume entstehen, die bei Trittbelastung nachgeben und somit einen höheren Dämpfungseffekt bewirken, als bei Unterlagsplatten ohne diese Rillen. Die auf die glatte Oberseite der Unterlagsplatte bzw. -bahn aufgebrachte Dampfsperre schützt vor aufsteigender Feuchtigkeit, so daß kein Wasser in das Holz oder den Kork eindringen kann und diese nicht aufquellen können.

Des weiteren kann die Unterlagsplatte in mehreren Lagen aufklappbar ausgebildet sein, um das Verlegen zu erleichtern und eine große Anzahl von Stößen zu verhindern. Zwangsläufig dennoch auftretende Stöße sowie die Dehnungsfugen werden später durch selbstklebende Folienstreifen abgedeckt. Bei mit Aluminiumfolie kaschierten Unterlagsplatten ist dies vorzugsweise ein selbstklebender Aluminiumstreifen.

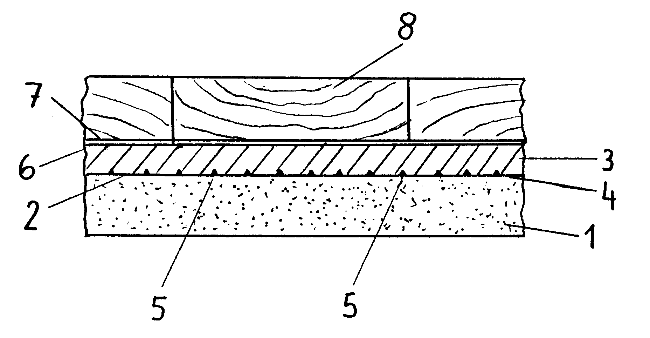

An einem bevorzugten Ausführungsbeispiel wird die erfindungsgemäße Verwendung der Unterlagsplatte bzw. -bahn unter Bezugnahme auf die zugehörige Zeichnung näher beschrieben. Die einzige Zeichnung zeigt einen Schnitt durch einen Teilbereich eines Fußbodens.

Dieser Fußboden besteht zunächst aus einem Untergrund 1, der in der Regel aus Beton gegossen ist. Auf der Oberfläche 2 des Untergrundes 1 ist die Unterlagsplatte 3, die aus extrudiertem Hartschaum besteht, aufgelegt. An der Unterseite 4 der Unterlagsplatte 3 sind rasterartig, parallel zueinander verlaufende V-förmige Rillen angebracht. Die glatte Oberseite 6 der Unterlagsplatte 3 ist mit einer Aluminiumfolie 7 als Dampfsperre kaschiert. Oberhalb der Aluminiumfolie 7 ist ein Boden 8, beispielsweise ein Holzdielenboden, aufgelegt, so daß die Unterseite 9 des Bodens 8 auf der Aluminiumfolie 7 aufliegt. Der Untergrund 1, die Unterlagsplatte 3 und der Boden 8 bilden somit einen Verbund, wobei der Boden 8 schwimmend mit der Unterlagsplatte 3 auf dem Untergrund 1 aufgelegt ist.

## Patentansprüche

1. Platte oder bahnförmige Rolle aus einem extrudierten, vollständig aufgeschäumten Polystyrol-Hartschaum oder einem im Block geschäumten und anschließend geschälten Polystyrol-Hartschaum, gekennzeichnet durch die Verwendung als Unterlagsplatte zur Wärmedämmung, Feuchtigkeitsisolierung, Trittschalldämmung und zum Unebenheitsausgleich für Holzparkett, Holzdielenböden, Laminatböden und Korkfertigparkett.

2. Platte oder Rolle aus Polystyrol-Hartschaum zur Verwendung nach Anspruch 1, dadurch gekennzeichnet, daß auf die Oberseite (6) der Platte (3) oder Rolle eine Dampfsperre aufgebracht ist.

3. Platte oder Rolle nach Anspruch 2, dadurch gekennzeichnet, daß die Dampfsperre eine auf die Oberseite der Platte (3) oder Rolle aufkaschierte Aluminiumfolie ist.

4. Platte oder Rolle nach Anspruch 2, dadurch gekennzeichnet, daß die Dampfsperre aus einem flüssig aufgetragenen, aushärtbaren Material besteht.

5. Platte oder Rolle nach einem der Ansprüche 1 bis 4, dadurch gekennzeichnet, daß diese eine Stärke von etwa 2 bis 7 mm aufweist.

6. Platte oder Rolle nach einem der Ansprüche 1 bis 5, dadurch gekennzeichnet, daß die Rückseite (4) der Platte (3) oder Rolle mit Vertiefungen und/oder Erhöhungen versehen ist.

7. Platte oder Rolle nach Anspruch 6, dadurch gekennzeichnet, daß die Vertiefungen aus rasterartig angeordneten, V-förmigen Rillen (5) bestehen.

8. Platte oder Rolle nach Anspruch 6, dadurch gekennzeichnet, daß die Erhöhungen als rasterartig angeordnete Noppen ausgebildet sind.

9. Platte oder Rolle nach einem der Ansprüche 1 bis 8, dadurch gekennzeichnet, daß diese schwimmend unter dem Holzparkett, Holzdielenboden, Laminatboden bzw. Korkfertigparkett (8) verlegt ist.

10. Platte oder Rolle nach einem der Ansprüche 1 bis 9, dadurch gekennzeichnet, daß deren Rückseite (4) mit der Oberfläche (2) eines Untergrundes (1) verklebt ist.

11. Platte oder Rolle nach einem der Ansprüche 1 bis 13, dadurch gekennzeichnet, daß deren Oberseite (6) mit der Unterfläche (9) des Holzparketts, Holzdielenbodens, Laminatbodens bzw. Korkfertigparketts (8) verklebt ist.

12. Platte oder Rolle nach einem der Ansprüche 1 bis 11, dadurch gekennzeichnet, daß die Dehnfugen zwischen benachbarten Platten (3) oder Rollen-Bahnen mit selbstklebenden Folienstreifen abgedeckt sind.

13. Platte oder Rolle nach einem der Ansprüche 1 bis 12, dadurch gekennzeichnet, daß die Oberseite (6) der Platte (3) oder Rolle eine Papierkaschierung aufweist.
